# EUROPÄISCHE PATENTSCHRIFT

(11) **EP 1 369 306 B1**
(45) Veröffentlichungstag und Bekanntmachung des Hinweises auf die Patenterteilung: **12.07.2006**
(21) Anmeldenummer: 03090160.7
(22) Anmeldetag: 27.05.2003
(51) Int. Cl.: B60R 16/02

(54) **Kommunikationsplattform in einem Kraftfahrzeug**
Communication Platform for an Automobile
Plateforme de communication pour une automobile

(30) Priorität: 06.06.2002 DE 10225550
(43) Veröffentlichungstag der Anmeldung: 10.12.2003
(73) Patentinhaber: Volkswagen AG, 38436 Wolfsburg (DE)
(72) Erfinder: Wengelnik, Heino, 38442 Wolfsburg (DE); Fürstenow, Thomas, 38104 Braunschweig (DE); Wiel, Martin, 01324 Dresden (DE); Richter, Thorsten, 38165 Lehre (DE)
(74) Vertreter: Effert, Bressel und Kollegen

(56) Entgegenhaltungen:
- EP-A- 0 890 907
- WO-A-01/77877
- DE-A- 19 935 893
- JAMEEL A ET AL: "Internet multimedia on wheels: connecting cars to cyberspace" INTELLIGENT TRANSPORTATION SYSTEM, 1997. ITSC '97., IEEE CONFERENCE ON BOSTON, MA, USA 9-12 NOV. 1997, NEW YORK, NY, USA,IEEE, US, 9. November 1997 (1997-11-09), Seiten 637-642, XP010270841 ISBN: 0-7803-4269-0

## Beschreibung

Die Erfindung betrifft eine Kommunikationsplattform in einem Kraftfahrzeug.

Aus der DE 199 35 893 A1 ist ein Kraftfahrzeug mit einer Fahrzeugelektronik bekannt, die eine PC-Schnittstelle zum Verbinden der Fahrzeugelektronik mit einem Personal Computer aufweist. Bei diesem Personal Computer handelt es sich vorzugsweise um einen mobilen Personal Computer, den ein Nutzer an die Schnittstelle anschließen kann. Über den Personal Computer kann dann der Nutzer auf die Fahrzeugelektronik zugreifen und diese über die Eingabeelemente des Personal Computers ansteuern. Ebenso soll es möglich sein, über Bedienelemente der Fahrzeugelektronik auf den Personal Computer zuzugreifen. In einer weiteren Ausführungsform wird dort vorgeschlagen, dass das Kraftfahrzeug mit einem Fahrzeug-Personal Computer ausgebildet ist, der eine Schnittstelle zum Anschließen eines weiteren mobilen Personal Computers aufweist. Die Schnittstelle kann dabei als Luftschnittstelle oder als Steckverbinder ausgebildet sein. Der Personal Computer und/oder die Fahrzeugelektronik weisen dabei vorzugsweise wenigstens eine Kommunikationsschnittstelle, insbesondere GSM (Global System for Mobile Communications, GPS (Global Positioning System), DVB (Digital Video Broadcasting) oder DAB (Digital Audio Broadcasting), auf.

In EP 0 890 907 wird ein kommunikationssystem an Bord eines Verkehrsflugzeugs vorgestellt, das Passagieren Zugang auf Inhalte aus dem internet während des Flugs gewährt. Die Passagierterminals sind dabei an einen Netzwerk-Server angeschlossen der vor der Reisegeladene inhalte speichert, oder via Satellit mit anderen Rechnern kommuniziert.

Der Erfindung liegt das technische Problem zugrunde, eine verbesserte Kommunikationsplattform in einem Kraftfahrzeug zu schaffen.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu umfasst die Kommunikationsplattform in einem Kraftfahrzeug einen von einem Fahrzeugsystemrechner unabhängigen Netzwerk-Server, der über mindestens eine Schnittstelle verfügt, über die der Server mit mobilen Kommunikationsendgeräten in dem Kraftfahrzeug und/oder externen Kommunikationseinrichtungen oder Datenbanken verbindbar ist. Unabhängig ist dabei so zu verstehen, dass der Fahrzeugsystemrechner und der Server zwar eine gemeinsame Spannungsversorgung aufweisen können, jedoch jeweils völlig getrennt voneinander arbeiten und jeweils ein autarkes Netzwerk bilden. Dabei kann entweder vorgesehen sein, dass zwischen den beiden keine Verbindung besteht oder aber eine gezielte Verbindung herstellbar ist, sodass spezielle Daten, die für das andere Netzwerk von Interesse sind, austauschbar sind. Hierzu muss dann gegebenenfalls zwischen dem Server und dem Fahrzeugrechner ein Gateway implementiert werden. Hierdurch wird der Fahrzeugsystemrechner nur durch eine Kommunikation belastet, die für diesen relevant ist, wohingegen die gesamte andere Kommunikation über den Netzwerk-Server läuft, der somit ein kleines autarkes Netzwerk bildet. Des weiteren wird die Kommunikation beispielsweise zwischen zwei mobilen Kommunikationsendgeräten vereinfacht, da deren Daten nicht über den Fahrzeugsystemrechner sowie eine gegebenenfalls vorhandene Firewall müssen.

In einer bevorzugten Ausführungsform ist mindestens eine Schnittstelle des Servers als Luftschnittstelle ausgebildet.

In einer weiteren bevorzugten Ausführungsform ist die Luftschnittstelle als GSM- und/oder UMTS- und/oder GPS- und/oder DAB- und/oder DVB-Schnittstelle ausgebildet.

In einer weiteren bevorzugten Ausführungsform ist mindestens eine Schnittstelle als Steckverbinder ausgebildet.

In einer weiteren bevorzugten Ausführungsform sind die mobilen Kommunikationsendgeräte als Notebook, Sub-Notebook, Palmtop, PDA, Laptop und/oder Mobilfunktelefon ausgebildet.

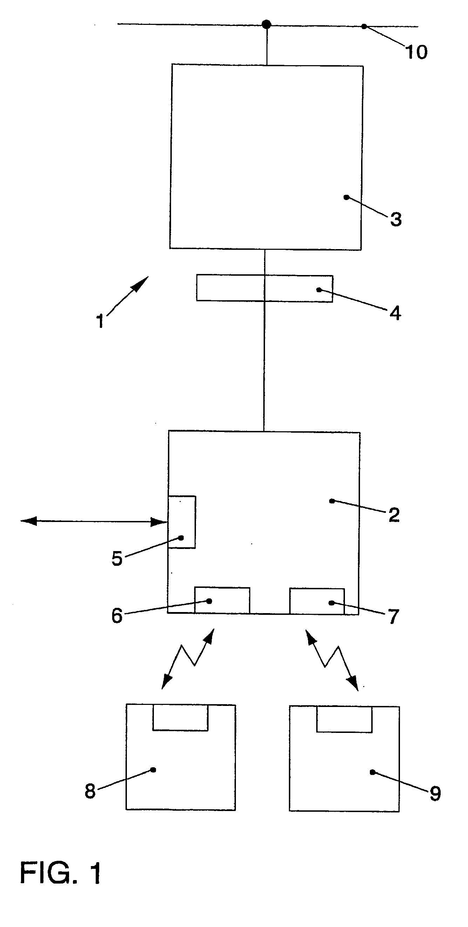

Die Erfindung wird nachfolgend anhand eines bevorzugten Ausführungsbeispieles näher erläutert. Die einzige Figur zeigt ein schematisches Blockschaltbild einer Kommunikationsplattform in einem Kraftfahrzeug.

Die Kommunikationsplattform 1 umfasst einen Netzwerk-Server 2 und einen Fahrzeugsystemrechner 3, zwischen denen eine Firewall 4 integriert ist. Der Netzwerk-Server 2 ist mit verschiedenen Schnittstellen 5 - 7 ausgebildet, wobei die Schnittstelle 5 als GSM- oder UMTS-Schnittstelle ausgebildet ist, wohingegen die Schnittstellen 6, 7 beispielsweise als Bluetooth-Schnittstellen für mobile Kommunikationsendgeräte 8, 9 ausgebildet sind. Der Fahrzeugsystemrechner 3 ist über mindestens ein Bussystem 10 mit einer Vielzahl von Fahrzeugsteuergeräten verbunden, die aus Übersichtsgründen nicht dargestellt sind.

Über den Netzwerk-Server 2 wird ein Netzwerk für beliebige Infotaiment-Systeme gebildet, die den Fahrzeugsystemrechner 3 weitgehend nicht belasten sollen, wobei im Extremfall sogar zwischen Fahrzeugsystemrechner 3 und Netzwerk-Server 2 keine Verbindung besteht.

Sind nun beispielsweise die beiden mobilen Kommunikationsendgeräte 8, 9 zwei Laptops von zwei Fahrzeuginsassen, so können diese Daten über den Netzwerk-Server 2 austauschen, ohne den Fahrzeugsystemrechner 3 zu belasten. Ebenso kann ein Laptop Daten über die GSM-Schnittstelle von einer externen Datenbank oder einer anderen externen Kommunikationseinrichtung abrufen bzw. an diese senden. Über den Netzwerk-Server 2 können darüber hinaus weitere Infotaiment-Systeme, wie beispielsweise DAB oder DVB, gemanagt werden, ohne den Fahrzeugsystemrechner 3 zu belasten. Sind hingegen die Daten für den Fahrzeugsystemrechner 3 bestimmt, so können diese über die Firewall 4 zum Fahrzeugsystemrechner 3 übertragen werden. Dies können beispielsweise Verkehrsnachrichten für ein Navigationssystem über die GSM-Schnittstelle oder Adressdaten für eine Adressdatenbank des Fahrzeugsystemrechners sein, die über einen Laptop eingespielt werden.

Der Vorteil der skizzierten Infrarot-Luftschnittstellen 6, 7 für die mobilen Kommunikationsendgeräte ist, dass keine störenden Kabel die Bedienung behindern. Allerdings haben drahtgebundene Verbindungen noch immer den Vorteil höherer Übertragungsraten, sodass diese für bestimmte Anwendungsfälle zu bevorzugen sind. Des weiteren kann über eine derartige Steckverbindung auch eine Energieversorgung für die Akkumulatoren der mobilen Kommunikationsendgeräte erfolgen, wobei hierzu vorzugsweise eine zweite separate Steckverbindung Verwendung findet.

## Patentansprüche

1. Kommunikationsplattform in einem Kraftfahrzeug, umfassend einen von einem Fahrzeugsystemrechner (3) unabhängigen Netzwerk-Server (2), der über mindestens eine Schnittstelle (5 - 7) verfügt, über die der Netzwerk-Server (2) mit mobilen Kommunikationsendgeräten (8, 9), die sich in dem Kraftfahrzeug und/oder externen Kommunikationseinrichtungen oder Datenbanken, befinden verbindbar ist.
**dadurch gekennzeichnet, dass**
der Netzwerk-Server (2) mit dem Fahrzeugsystemrechner (3) verbunden ist, in dem eine Firewall (4) integriert ist.

2. Kommunikationsplattform nach Anspruch 1, **dadurch gekennzeichnet, dass** mindestens eine Schnittstelle (5 - 7) des Netzwerk-Servers (2) als Luftschnittstelle ausgebildet ist.

3. Kommunikationsplattform nach Anspruch 2, **dadurch gekennzeichnet, dass** die Luftschnittstelle als GSM- und/oder UMTS- und/oder GPS- und/oder DAB- und/oder DVB-Schnittstelle ausgebildet ist.

4. Kommunikationsplattform nach Anspruch 2 oder 3, **dadurch gekennzeichnet, dass** mindestens eine Luftschnittstelle als iR-Schnittstelle ausgebildet ist.

5. Kommunikationsplattform nach einem der vorangegangenen Ansprüche, **dadurch gekennzeichnet, dass** mindestens eine Schnittstelle als Steckverbinder ausgebildet ist.

6. Kommunikationsplattform nach einem der vorangegangenen Ansprüche, **dadurch gekennzeichnet, dass** die mobilen Kommunikationsendgeräte (8, 9) als Notebook, Sub-Notebook, Palmtop, PDA, Laptop und/oder Mobilfunktelefon ausgebildet sind.

## Claims

1. Communication platform in a motor vehicle, comprising a network server (2) which is independent of a vehicle system computer (3) and which has at least one interface (5-7) which can be used to connect the network server (2) to mobile communication terminals (8, 9) situated in the motor vehicle and/or in external communication devices or databases,
**characterized in that**
the network server (2) is connected to the vehicle system computer (3), in which a firewall (4) is integrated.

2. Communication platform according to Claim 1, **characterized in that** at least one interface (5-7) of the network server (2) is in the form of an air interface.

3. Communication platform according to Claim 2, **characterized in that** the air interface is in the form of a GSM and/or UMTS and/or GPS and/or DAB and/or DVB interface.

4. Communication platform according to Claim 2 or 3, **characterized in that** at least one air interface is in the form of an iR interface.

5. Communication platform according to one of the preceding claims, **characterized in that** at least one interface is in the form of a plug connector.

6. Communication platform according to one of the preceding claims, **characterized in that** the mobile communication terminals (8, 9) are in the form of a notebook, sub-notebook, palmtop, PDA, laptop and/or mobile radio telephone.

## Revendications

1. Plate-forme de communication dans un véhicule automobile, comprenant un serveur de réseau (2) indépendant d'un ordinateur du système du véhicule (3), lequel dispose d'au moins une interface (5 - 7) par le biais de laquelle le serveur de réseau (2) peut être connecté avec des terminaux de communication mobiles (8, 9) qui se trouvent dans le véhicule automobile et/ou des dispositifs de communication externes ou des bases de données, **caractérisée en ce que** le serveur de réseau (2) est relié avec l'ordinateur du système du véhicule (3) dans lequel est intégré un pare-feu (4).

2. Plate-forme de communication selon la revendication 1, **caractérisée en ce qu'**au moins une interface (5 - 7) du serveur de réseau (2) est réalisée sous la forme d'une interface radioélectrique.

3. Plate-forme de communication selon la revendication 2, **caractérisée en ce que** l'interface radioélectrique est réalisée sous la forme d'une interface GSM et/ou UMTS et/ou GPS et/ou DAB et/ou DVB.

4. Plate-forme de communication selon la revendication 2 ou 3, **caractérisée en ce qu'**au moins une interface radioélectrique est réalisée sous la forme d'une interface à infrarouges.

5. Plate-forme de communication selon l'une des revendications précédentes, **caractérisée en ce qu'**au moins une interface est réalisée sous la forme d'un connecteur.

6. Plate-forme de communication selon l'une des revendications précédentes, **caractérisée en ce que** les terminaux de communication mobiles (8, 9) sont réalisés sous la forme d'un notebook, d'un PC de poche, d'un Palmtop, d'un assistant numérique personnel, d'un ordinateur portable et/ou d'un radiotéléphone mobile.
